# FASCICULE DE BREVET EUROPEEN

(11) **EP 2 572 962 B1**
(45) Date de publication et mention de la délivrance du brevet: **18.11.2015**
(21) Numéro de dépôt: 12184659.6
(22) Date de dépôt: 17.09.2012
(51) Int. Cl.: B62D 1/19, F16B 37/04

(54) **Ensemble d'attache pour colonne de direction**
Befestigungseinheit für Lenksäule
Attachment assembly for steering column

(30) Priorité: 21.09.2011 FR 1158397
(43) Date de publication de la demande: 27.03.2013
(73) Titulaire: Fuji Autotech France SAS, 25350 Mandeure (FR)
(72) Inventeur: Tomasino, Hervé, 25600 Nommay (FR); Cholley, Fabien, 25260 Montenois (FR)
(74) Mandataire: Jacobson, Claude

(56) Documents cités:
- DE-A1- 10 007 145
- DE-A1-102004 063 686
- FR-A1- 2 697 059
- FR-A1- 2 722 749
- US-A- 3 868 864
- US-A- 5 713 707

## Description

La présente invention concerne un ensemble d'attache pour colonne de direction de véhicule automobile comprenant un corps de colonne, une première tôle solidaire du reste de la structure du véhicule et une attache élastique, dans lequel l'attache élastique est adaptée pour fixer la première tôle sur le corps de colonne, dans lequel l'attache élastique comporte une embase et au moins une première languette axiale repliée et une deuxième languette axiale repliée.

Elle s'applique notamment à la fixation d'une tôle, qui elle-même est fixée sur le reste de la structure du véhicule automobile, sur un corps d'une colonne de direction de telle manière à autoriser un débattement angulaire de la tôle et donc du corps de colonne par rapport au reste de la structure du véhicule automobile. L'invention permet également de rattraper des jeux d'assemblage.

De FR 2 722 749, on connaît un ensemble d'attache du type précité.

L'attache élastique de cet ensemble présente un faible encombrement en hauteur au niveau de la fixation de la première tôle sur le corps d'une colonne. Néanmoins, l'attache élastique présente l'inconvénient qu'une seule épaisseur de tôle peut être serrée. Cette tôle joue deux rôles : elle est un moyen d'absorption d'énergie en cas d'un choc sur la colonne de direction et un moyen de fixation pour fixer la colonne de direction sur le reste de la structure du véhicule. Le moyen d'absorption d'énergie est réalisé par la liaison détachable entre la tôle et l'attache élastique.

En effet, il est préférable de serrer deux tôles, qui sont adaptées pour coopérer l'une avec l'autre et dont la première est fixée solidairement sur la structure du véhicule et sur l'attache élastique et dont la deuxième est fixée solidairement au corps de colonne et de manière détachable sur l'attache élastique. Un tel montage permet, lors d'un choc sur la colonne de direction, d'absorber l'énergie du choc par la deuxième tôle qui se déforme et, le cas échéant, se détache de l'attache et du corps de colonne, alors que la première tôle en reste solidaire. C'est-à-dire, en utilisant deux tôles, le moyen d'absorption d'énergie est séparé du moyen de fixation. Après un choc sur la colonne de direction, le corps de colonne reste fixé sur le reste de la structure du véhicule automobile par la coopération des deux tôles. Néanmoins, le fait de serrer deux tôles augmente considérablement la hauteur de l'attache élastique ce qui engendre des problèmes lors de l'installation.

Il faut donc assurer que l'attache élastique serrant deux tôles présente un faible encombrement en hauteur tout en étant assez rigide.

La présente invention a pour but de remédier aux problèmes mentionnés ci-dessus.

A cet effet, l'invention a pour objet un ensemble d'attache du type précité, dans lequel la première languette axiale repliée s'étend à partir d'une première extrémité axiale de l'embase sensiblement parallèlement à l'embase, caractérisé en ce quel l'ensemble d'attache comprend une deuxième tôle solidaire du corps de la colonne et l'attache élastique est adaptée pour fixer la deuxième tôle par serrage, en ce que la deuxième languette axiale repliée s'étend à partir d'une seconde extrémité axiale de l'embase, à l'opposé de la première extrémité axiale, sensiblement parallèlement à l'embase, et en ce que les première et deuxième languettes sont repliées d'un même côté de l'embase de telle sorte que la deuxième languette est agencée entre l'embase et la première languette.

Une telle géométrie assure que l'attache est rigide et présente également un faible encombrement en hauteur.

Selon d'autres modes de réalisation, l'invention comporte l'une ou plusieurs des caractéristiques suivantes, prises isolément ou ensemble selon toutes les combinaisons techniquement possibles :
- les première et deuxième languettes axiales repliées comportent chacune un trou de passage adapté pour recevoir des moyens de serrage, les trous de passage étant agencés en regard l'un de l'autre, la première tôle comporte un trou de passage qui est agencé en regard des trous de passage des première et deuxième languettes lorsque la première tôle est dans une position de fixation et, en position de fixation, la première tôle est adaptée pour être fixée par les moyens de serrage entre les première et deuxième languettes ;
- l'embase comporte une ouverture centrale de sorte à former deux âmes latérales de part et d'autre de l'ouverture centrale et les âmes comportent chacune une dépression orientée vers la première languette et adaptée pour former un point de contact avec la deuxième tôle;
- la première languette présente une taille sensiblement identique à celle de l'embase et la deuxième languette présente une taille sensiblement identique à celle de l'ouverture centrale ;
- la deuxième tôle est serrée entre l'embase et la première tôle une fois que la première tôle est fixée entre les première et deuxième languettes de telle manière à pouvoir glisser axialement par rapport à l'attache élastique et la première tôle en cas d'un choc sur la colonne de direction ;
- la deuxième tôle comporte un évidement adapté pour recevoir la deuxième languette ; et
- la première tôle présente une zone qui est complémentaire de forme d'une zone correspondante de la deuxième tôle et qui est adaptée pour retenir la deuxième tôle lors d'un choc sur la colonne de direction.

L'invention a en outre pour objet une colonne de direction comprenant un corps de colonne, un arbre de direction reçu dans le corps de colonne et des moyens de réglage adaptés pour régler en position le corps de colonne par rapport au reste de la structure du véhicule, **caractérisée en ce que** la colonne de direction comporte un ensemble d'attache tel que défini ci-dessus.

L'invention sera mieux comprise à la lecture de la description qui va suivre, donnée uniquement à titre d'exemple et faite en se référant aux dessins annexés, sur lesquels :
- la figure 1 est une représentation schématique d'une colonne de direction selon l'invention comportant un ensemble d'attache selon l'invention,
- la figure 2 est une représentation schématique en perspective d'un ensemble d'attache selon l'invention comprenant une attache élastique et deux tôles,
- la figure 3 est une vue schématique en perspective de l'attache élastique de la figure 2,
- la figure 4 est une représentation en coupe selon le plan P de l'attache élastique de la figure 3,
- la figure 5 est une représentation de côté de l'ensemble d'attache de la figure 2, et
- la figure 6 est une vue analogue à celle de la figure 5 représentant l'ensemble d'attache selon une variante.

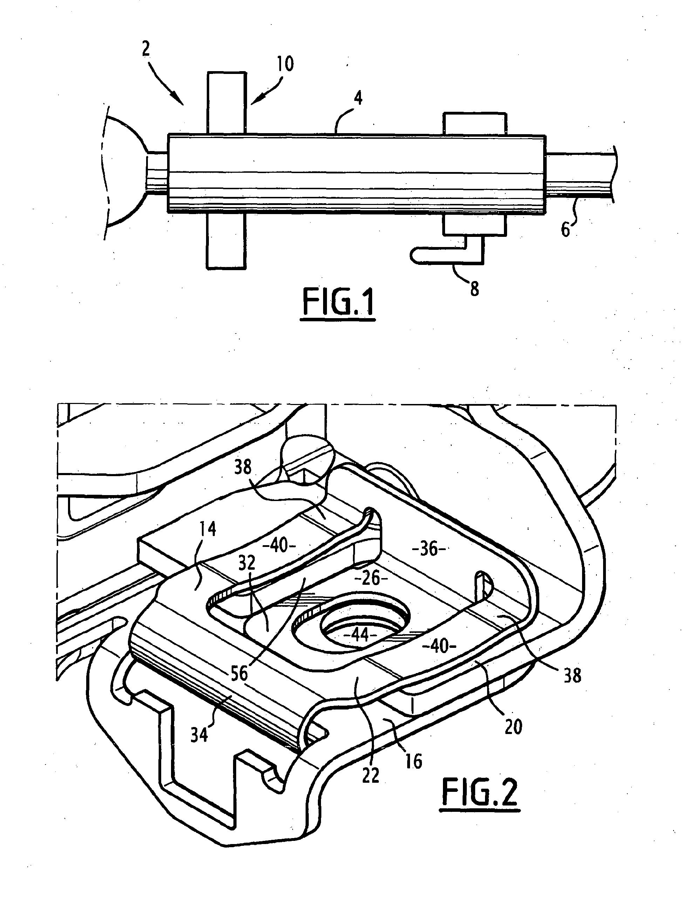

Sur la figure 1 est représentée une colonne de direction désignée par la référence générale 2. La colonne de direction 2 comprend un corps de colonne 4, un arbre de direction 6, des moyens de réglage 8 et un ensemble d'attache 10.

Le corps de colonne 4 comporte à l'une de ses extrémités les moyens de réglage 8 et à l'autre de ses extrémité l'ensemble d'attache 10.

L'arbre de direction 6 est monté rotatif dans le corps de colonne 4. L'arbre de direction 6 comporte une extrémité qui est adaptée pour porter un volant de direction et une autre extrémité qui est adaptée pour être reliée au reste du mécanisme de direction du véhicule.

Les moyens de réglage 8 sont adaptés pour régler en position le corps de colonne 4 par rapport au reste de la structure du véhicule pour permettre un réglage de la position angulaire et axiale du volant de direction. Différents modes de réalisation de ces moyens de réglage 8 peuvent être envisagés et sont bien connus dans l'état de la technique.

L'ensemble d'attache 10 comporte le corps de colonne 4, une attache élastique 14 et une première tôle 16. L'ensemble 10 comporte en outre, des moyens de serrage (non représentés) et une deuxième tôle 20.

La première tôle 16 est solidaire du reste de la structure du véhicule. La première tôle 16 est fixée solidairement sur l'attache élastique 14 par l'intermédiaire des moyens de serrage.

La deuxième tôle 20 est solidaire du corps de colonne 4. La deuxième tôle 20 est fixée de manière détachable par serrage sur l'attache élastique 14.

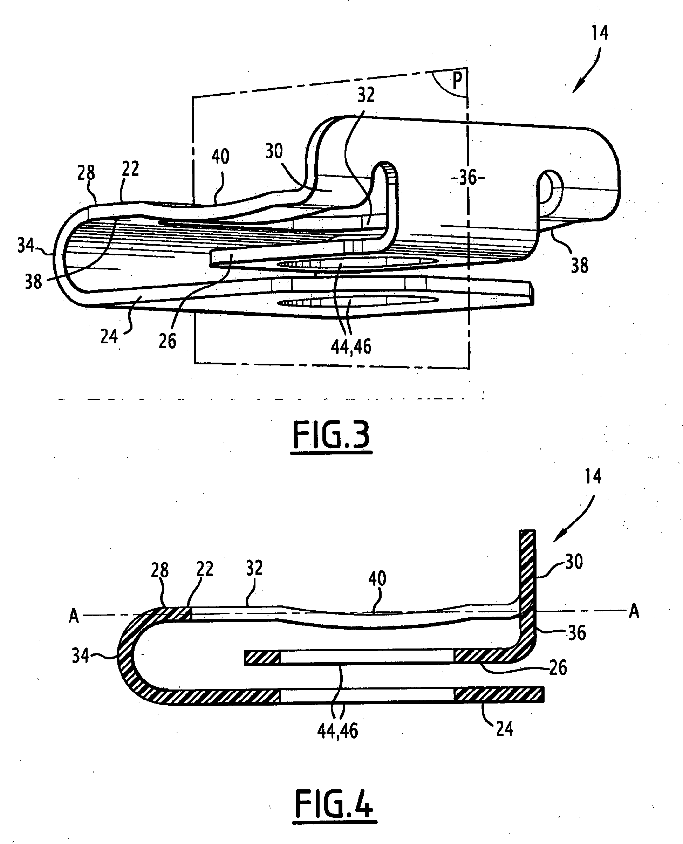

L'attache élastique 14 comporte une embase 22, une première languette axiale 24 et une deuxième languette axiale 26 (figure 3).

L'embase 22 comporte une première extrémité axiale 28 et une seconde extrémité axiale 30 à l'opposé de la première extrémité axiale 28. L'expression « axiale » se réfère à l'axe A-A représenté sur la figure 4 et qui est situé dans le plan de l'embase 22.

L'embase 22 comporte en outre une ouverture centrale 32.

Dans l'exemple représenté sur les figures, l'ouverture centrale 32 présente sensiblement la forme d'un rectangle qui est délimité à la première extrémité axiale 28 et à la seconde extrémité axiale 30 d'un premier élément de raccord 34 et d'un deuxième élément de raccord 36, respectivement. Les premier et deuxième éléments de raccord 34, 36 raccordent les première et deuxième languettes 24, 26 respectivement, à l'embase 22. L'ouverture centrale 32 en forme de rectangle est latéralement délimitée par deux âmes 38. Les deux âmes 38 sont reliées l'une à l'autre au niveau de leurs extrémités par les premiers et deuxième éléments de raccord 34, 36.

Les âmes 38 comportent centralement chacune une dépression 40 (figures 3 et 4). Les dépressions 40 sont orientées vers la première languette 24. Les dépressions 40 sont adaptées pour former un point de contact avec la deuxième tôle 20 de sorte à ce que l'attache élastique 14 pince la deuxième tôle 20 entre l'embase 22 et la première languette 24.

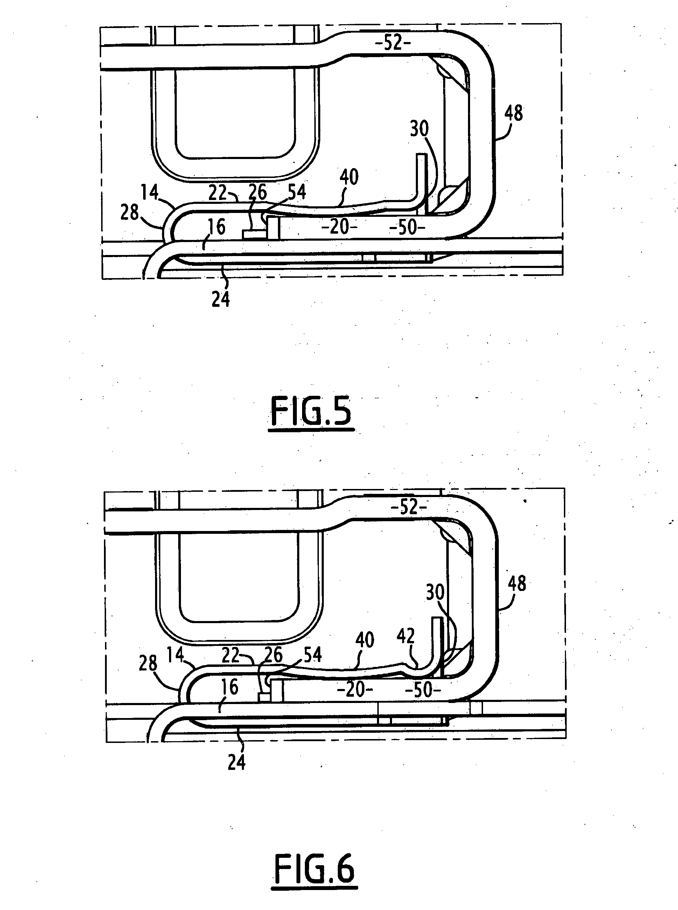

En variante, le point de contact n'est pas formé par une dépression 40 dans l'embase 22, mais par une saillie sur l'embase 22. En variante encore, l'embase 22 comporte une dépression supplémentaire 42 agencée à la seconde extrémité axiale 30 de l'embase 22 (figure 6). La dépression supplémentaire 42 est orientée, comme les dépressions 40 vers la première languette 24. La dépression supplémentaire 42 est adaptée pour former un point de contact supplémentaire avec la deuxième tôle 20 et pour renforcer le maintien de la deuxième tôle 20 dans l'attache élastique 14. En variante, la dépression supplémentaire 42 peut être une saillie.

A partir de chacun des premier et deuxième éléments de raccord 34, 36 s'étendent la première languette 24 et la deuxième languette 26, respectivement.

Les languettes 24, 26 sont repliées sur l'embase 22 de sorte à s'étendre sensiblement parallèlement à l'embase 22. Ce plissement confère une élasticité à l'attache élastique 14. Les languettes 24, 26 sont repliées d'un même côté de l'embase 22 de telle sorte à ce que la deuxième languette 26 est agencée entre l'embase 22 et la première languette 24.

La première languette 24 présente une taille sensiblement identique à celle de l'embase 22 de sorte à ce qu'une partie de la première languette 24 se trouve en regard des âmes 38 de l'embase 22 (figure 3). La deuxième languette 26 présente une taille sensiblement identique à celle de l'ouverture centrale 32 (figure 2). La deuxième languette 26 présente une forme et une taille adaptées pour coopérer avec la deuxième tôle 20.

Les première et deuxième languettes 24, 26 comportent chacune un trou de passage 44. Les trous de passage 44 de chaque languette 24, 26 sont agencés en regard l'un de l'autre de sorte à définir un canal de passage 46 adapté pour recevoir les moyens de serrage.

Les trous de passage 44 des première et deuxième languettes 24, 26 sont agencés en regard de l'ouverture centrale 32 de l'embase 22.

L'ouverture centrale 32 est plus grande que les trous de passage 44 afin de faciliter l'accès aux moyens de serrage du côté embase 22.

L'attache élastique 14 présente une faible hauteur au niveau du canal de passage 46 des moyens de serrage. La hauteur est mesurée perpendiculairement au plan de l'embase 22. L'attache élastique 14 présente une hauteur comprise entre 4 et 8 mm, de préférence entre 4 et 6 mm.

Cette hauteur est prise entre la face de la languette 26 tournée vers le haut de la Figure 4, et la face de la languette 24 tournée vers le bas de la Figure 4 , c'est-à-dire à l'opposée de la languette 26.

La première tôle 16 est adaptée pour être serrée entre les première et deuxième languettes 24, 26 dans une position de fixation (figures 2 et 5). La première tôle 16 comporte un trou de passage 44, qui est, lorsque la première tôle 16 est dans la position de fixation, en regard des trous de passage 44 des première et deuxième languettes 24, 26.

La première tôle 16 est donc adaptée pour être fixée solidairement à l'attache élastique 14 au moyen des moyens de serrage qui passent à travers les trous de passage 44 des premières et deuxième languettes 24, 26 et de la première tôle 16.

La deuxième tôle 20 est une lamelle 48 repliée sur elle-même (figure 5). La deuxième tôle 20 est adaptée pour se dérouler le long de l'axe A-A lors d'un choc sur la colonne de direction 2 et pour absorber l'énergie du choc.

La lamelle 48 comporte deux branches 50, 52 dont l'une, notamment la branche dite de serrage 50, est fixée à l'attache élastique 14.

La branche de serrage 50 comporte une extrémité libre 54. L'extrémité libre 54 comporte un évidement 56 adapté pour recevoir la deuxième languette 26. Sur la figure 2 est représentée la deuxième tôle 20 dans une position de serrage. Dans cette position de serrage, l'évidement 56 de la deuxième tôle 20 vient axialement en buté contre la deuxième languette 26, de sorte à ce que la deuxième tôle 20 reçoit la deuxième languette 26. L'évidement 56 a de préférence une forme complémentaire à celle de la deuxième languette 26. Ceci présente l'avantage que tout mouvement de la deuxième tôle 20, à part la translation le long de l'axe A-A, est bloqué.

En variante, l'évidement 56 est plus grand que la taille de la deuxième tôle 20 et d'autres moyens de blocage sont prévues.

En variante encore, l'évidement 56 est plus grand que la taille de la deuxième tôle 20, et la deuxième tôle 20 est libre à se déplacer par rapport à l'attache élastique 14 dans un plan défini par la branche de serrage 50.

La deuxième tôle 20 est adaptée pour être serrée par l'attache élastique 14 entre les âmes 38 de l'embase 22 et la première tôle 16, une fois que la première tôle 16 est fixée entre les première et deuxième languettes 24, 26. La deuxième tôle 20 est retenue par l'attache élastique 14 uniquement par friction aux points de contact avec les dépressions 40 et, le cas échéant, la dépression supplémentaire 42 de l'embase 22, et par le contact avec la première tôle 16. La deuxième tôle 20 est adaptée pour glisser axialement par rapport à l'attache élastique 14 et, le cas échéant, pour se détacher de l'attache élastique 14. Cette possibilité de déplacement de la deuxième tôle 20 est primordiale, par exemple lors d'un choc sur la colonne de direction 2.

La première tôle 16 présente en outre une zone de coopération adaptée pour coopérer avec une zone complémentaire de la deuxième tôle 20. La zone de la première tôle 16 est par exemple une rainure qui s'étend parallèlement à l'axe A-A et qui est délimitée à au moins l'une de ses extrémités par une butée. La zone de la deuxième tôle 20 est par exemple une saillie qui est adaptée pour coulisser dans la rainure lors d'un choc sur la colonne de direction 2 et pour venir en appui contre la butée lorsque la deuxième tôle 20 n'est plus serrée par l'attache élastique 14. Ceci empêche la deuxième tôle 20 de se détacher de la première tôle 16, même si la deuxième tôle 20 n'est plus serrée par l'attache élastique 14. En variante, la zone de la première tôle 16 est une saillie et la zone de la deuxième tôle 20 est une rainure.

En variante encore, les zones de coopération des première et deuxième tôles 16, 20 présentent d'autres formes adaptées pour laisser la deuxième tôle 20 se déplacer axialement par rapport à la première tôle 16 et pour empêcher la deuxième tôle 20 de se détacher de la première tôle 16.

Les moyens de serrage comprennent une vis et un écrou (non représentés). La vis est logée dans le reste de la structure du véhicule et passe à travers les trous de passage 44 de la première tôle 16 et des première et deuxième languettes 24, 26 de l'attache élastique 14. L'écrou coopère avec la vis du côté embase 22 de sorte à fixer solidairement l'attache élastique 14 au reste de la structure du véhicule et la première tôle 16 à l'attache élastique 14.

L'écrou présente une taille adaptée pour se loger dans l'ouverture centrale 32, en appui contre la deuxième languette 26. En variante, non pas l'écrou mais la tête de vis est logée dans l'ouverture centrale 32.

De ce fait, l'encombrement de l'attache élastique en hauteur est limitée.

L'ensemble d'attache 10 selon l'invention présente l'avantage que l'attache élastique 14 est adaptée et suffisamment rigide pour fixer deux tôles 16, 20 et ceci tout en présentant une faible hauteur.

## Revendications

1. Ensemble d'attache (10) pour colonne de direction (2) de véhicule automobile comprenant un corps de colonne (4), une première tôle (16) solidaire du reste de la structure du véhicule et une attache élastique (14), dans lequel l'attache élastique (14) est adaptée pour fixer la première tôle (16) sur le corps de colonne (4), dans lequel l'attache élastique (14) comporte une embase (22) et au moins une première languette axiale repliée (24) et une deuxième languette axiale repliée (26), la première languette axiale repliée (24) s'étendant à partir d'une première extrémité axiale (28) de l'embase (22) sensiblement parallèlement à l'embase (22),
**caractérisé en ce que** l'ensemble d'attache (10) comprend une deuxième tôle (20) solidaire du corps de la colonne (4) l'attache élastique (14) étant adaptée pour fixer la deuxième tôle (20) par serrage,
**en ce que** la deuxième languette axiale repliée (26) s'étend à partir d'une seconde extrémité axiale (30) de l'embase (22), à l'opposé de la première extrémité axiale (28), sensiblement parallèlement à l'embase (22), et
**en ce que** les première et deuxième languettes (24, 26) sont repliées d'un même côté de l'embase (22) de telle sorte que la deuxième languette (26) est agencée entre l'embase (22) et la première languette (24).

2. Ensemble d'attache (10) selon la revendication 1, dans lequel les première et deuxième languettes axiales repliées (24, 26) comportent chacune un trou de passage (44) adapté pour recevoir des moyens de serrage (18), les trous de passage (44) étant agencés en regard l'un de l'autre, dans lequel la première tôle (16) comporte un trou de passage (44) qui est agencé en regard des trous de passage (44) des première et deuxième languettes (24, 26) lorsque la première tôle (16) est dans une position de fixation et dans lequel en position de fixation, la première tôle (16) est adaptée pour être fixée par les moyens de serrage (18) entre les première et deuxième languettes (24, 26).

3. Ensemble d'attache (10) selon la revendication 1 ou 2, dans lequel l'embase (22) comporte une ouverture centrale (32) de sorte à former deux âmes latérales (38) de part et d'autre de l'ouverture centrale (32) et dans lequel les âmes (38) comportent chacune une dépression (40) orientée vers la première languette (24) et adaptée pour former un point de contact avec la deuxième tôle (20).

4. Ensemble d'attache (10) selon la revendication 3, dans lequel la première languette (24) présente une taille sensiblement identique à celle de l'embase (22) et dans lequel la deuxième languette (26) présente une taille sensiblement identique à celle de l'ouverture centrale (32).

5. Ensemble d'attache (10) selon l'une quelconque des revendications 1 à 4, dans lequel la deuxième tôle (20) est serrée entre l'embase (22) et la première tôle (16) une fois que la première tôle (16) est fixée entre les première et deuxième languettes (24, 26) de telle manière à pouvoir glisser axialement par rapport à l'attache élastique (14) et la première tôle (16) en cas d'un choc sur la colonne de direction (2).

6. Ensemble d'attache (10) selon l'une quelconque des revendications 1 à 5, dans lequel la deuxième tôle (20) comporte un évidement (56) adapté pour recevoir la deuxième languette (26).

7. Ensemble d'attache (10) selon l'une quelconque des revendications 1 à 6, dans lequel la première tôle (16) présente une zone qui est complémentaire de forme d'une zone correspondante de la deuxième tôle (20) et qui est adaptée pour retenir la deuxième tôle (20) lors d'un choc sur la colonne de direction (2).

8. Colonne de direction (2) comprenant un corps de colonne (4), un arbre de direction (6) reçu dans le corps de colonne (4) et des moyens de réglage (8) adaptés pour régler en position le corps de colonne (4) par rapport au reste de la structure du véhicule (12), **caractérisée en ce que** la colonne de direction (2) comporte un ensemble d'attache (10) selon l'une quelconque des revendications précédentes.

## Patentansprüche

1. Befestigungsanordnung (10) für eine Kraftfahrzeuglenksäule (2), die einen Säulenkörper (4), ein mit dem Rest der Struktur des Fahrzeugs fest verbundenes erstes Blech (16) und eine elastische Befestigung (14) umfasst, wobei die elastische Befestigung (14) dafür ausgelegt ist, das erste Blech (16) am Säulenkörper (4) zu befestigen, wobei die elastische Befestigung (14) eine Befestigungsfläche (22) und wenigstens eine erste umgebogene axiale Lasche (24) und eine zweite umgebogene axiale Lasche (26) aufweist, wobei sich die erste umgebogene axiale Lasche (24) von einem ersten axialen Ende (28) der Befestigungsfläche (22) im Wesentlichen parallel zu der Befestigungsfläche (22) erstreckt,
**dadurch gekennzeichnet, dass** die Befestigungsanordnung (10) ein mit dem Säulenkörper (4) fest verbundenes zweites Blech (20) umfasst, wobei die elastische Befestigung (14) dafür ausgelegt ist, das zweite Blech (20) durch Klemmen zu befestigen,
dass sich die zweite umgebogene axiale Lasche (26) von einem zweiten axialen Ende (30) der Befestigungsfläche (22) gegenüber dem ersten axialen Ende (28) im Wesentlichen parallel zu der Befestigungsfläche (22) erstreckt und
dass die erste und die zweite Lasche (24, 26) von derselben Seite der Befestigungsfläche (22) umgebogen sind, derart, dass die zweite Lasche (26) zwischen der Befestigungsfläche (22) und der ersten Lasche (24) angeordnet ist.

2. Befestigungsanordnung (10) nach Anspruch 1, wobei die erste und die zweite umgebogene axiale Lasche (24, 26) jeweils ein Durchgangsloch (44) aufweisen, das dafür ausgelegt ist, Klemmmittel (18) aufzunehmen, wobei die Durchgangslöcher (44) einander gegenüber angeordnet sind, wobei das erste Blech (16) ein Durchgangsloch (44) aufweist, das gegenüber den Durchgangslöchern (44) der ersten und der zweiten Lasche (24, 26) angeordnet ist, wenn das erste Blech (16) in einer Befestigungsposition ist, und wobei das erste Blech (16) in der Befestigungsposition dafür ausgelegt ist, durch die Klemmmittel (18) zwischen der ersten und der zweiten Lasche (24, 26) befestigt zu werden.

3. Befestigungsanordnung (10) nach Anspruch 1 oder 2, wobei die Befestigungsfläche (22) eine mittige Öffnung (32) aufweist, derart, dass zwei seitliche Stege (38) beiderseits der mittigen Öffnung (32) gebildet sind, und wobei die Stege (38) jeweils eine Vertiefung (40) aufweisen, die zu der ersten Lasche (24) orientiert ist und dafür ausgelegt ist, einen Kontaktpunkt mit dem zweiten Blech (20) zu bilden.

4. Befestigungsanordnung (10) nach Anspruch 3, wobei die erste Lasche (24) eine Größe besitzt, die im Wesentlichen gleich jener der Befestigungsfläche (22) ist, und wobei die zweite Lasche (26) eine Größe besitzt, die im Wesentlichen gleich jener der mittigen Öffnung (32) ist.

5. Befestigungsanordnung (10) nach einem der Ansprüche 1 bis 4, wobei das zweite Blech (20) zwischen die Befestigungsfläche (22) und das erste Blech (16) geklemmt ist, sobald das erste Blech (16) zwischen der ersten und der zweiten Lasche (24, 26) befestigt ist, derart, dass es in Bezug auf die elastische Befestigung (14) und das erste Blech (16) im Fall eines Stoßes auf die Lenksäule (2) axial gleiten kann.

6. Befestigungsanordnung (10) nach einem der Ansprüche 1 bis 5, wobei das zweite Blech (20) eine Aussparung (56) aufweist, die dafür ausgelegt ist, die zweite Lasche (26) aufzunehmen.

7. Befestigungsanordnung (10) nach einem der Ansprüche 1 bis 6, wobei das erste Blech (16) eine Zone aufweist, deren Form zu jener einer entsprechenden Zone des zweiten Blechs (20) komplementär ist und die dafür ausgelegt ist, das zweite Blech (20) bei einem Stoß auf die Lenksäule (2) zu halten.

8. Lenksäule (2), die einen Säulenkörper (4), eine Lenkwelle (6), die in dem Säulenkörper (4) aufgenommen ist, und Einstellmittel (8), die dafür ausgelegt sind, die Position des Säulenkörpers (4) in Bezug auf den Rest der Struktur des Fahrzeugs (12) einzustellen, **dadurch gekennzeichnet, dass** die Lenksäule (2) eine Befestigungsanordnung (10) nach einem der vorhergehenden Ansprüche umfasst.

## Claims

1. Clamping assembly (10) for a steering column (2) of an automotive vehicle, comprising a column body (4), a first plate (16) connected to the rest of the vehicle structure and an elastic clamping means (14), which elastic clamping means (14) is designed to secure the first plate (16) to the column body (4), and the elastic clamping means (14) comprises a base (22) and at least a first folded axial tongue (24) and a second folded axial tongue (26), the first folded axial tongue (24) extending from a first axial end (28) of the base (22) substantially parallel with the base (22),
**characterised in that** the clamping assembly (10) comprises a secondplate (20) connected to the column body (4), the elastic clamping means (14) being designed to secure the second plate (20) by clamping,
and **in that** the second folded axial tongue (26) extends from a second axial end (30) of the base (22), opposite the first axial end (28), substantially parallel with the base (22), and
**in that** the first and second tongues (24, 26) are folded from a same side of the base (22) so that the second tongue (26) is disposed between the base (22) and the first tongue (24).

2. Clamping assembly (10) as claimed in claim 1, wherein the first and second folded axial tongues (24, 26) each comprise an orifice (44) designed to receive clamping means (18), the orifices (44) being disposed facing one another, and the first plate (16) comprises an orifice (44) disposed facing the orifices (44) of the first and second tongues (24, 26) when the first plate (16) is in a fixing position, the first plate (16) being designed so as to be fixed by the clamping means (18) between the first and second tongues (24, 26) in the fixing position.

3. Clamping assembly (10) as claimed in claim 1 or 2, wherein the base (22) comprises a central orifice (32) so as to form two lateral webs (38) on either side of the central orifice (32) and the webs (38) each comprise a depression (40) oriented towards the first tongue (24) and designed to form a point of contact with the second plate (20).

4. Clamping assembly (10) as claimed in claim 3, wherein the first tongue (24) is of a size substantially identical to that of the base (22) and the second tongue (26) is of a size substantially identical to that of the central orifice (32).

5. Clamping assembly (10) as claimed in any one of claims 1 to 4, wherein the second plate (20) is clamped between the base (22) and the first plate (16) once the first plate (16) has been secured between the first and second tongues (24, 26) to enable an axial sliding movement relative to the elastic clamping means (14) and the first plate (16) if the steering column (2) is subjected to an impact.

6. Clamping assembly (10) as claimed in any one of claims 1 to 5, wherein the second plate (20) comprises a recess (56) designed to receive the second tongue (26).

7. Clamping assembly (10) as claimed in any one of claims 1 to 6, wherein the first plate (16) has a zone which complements the shape of a corresponding zone of the second plate (20) and which is designed to retain the second plate (20) if the steering column (2) is subjected to an impact.

8. Steering column (2) comprising a column body (4), a steering shaft (6) accommodated in the column body (4) and adjusting means (8) designed to adjust the position of the column body (4) relative to the rest of the vehicle structure (12), **characterised in that** the steering column (2) comprises a clamping assembly (10) as claimed in any one of the preceding claims.
